(19) Europäisches Patentamt / European Patent Office / Office européen des brevets

(11) **EP 3 385 310 B1**

(12) **EUROPEAN PATENT SPECIFICATION**

(45) Date of publication and mention
of the grant of the patent:
**21.07.2021 Bulletin 2021/29**

(21) Application number: **16870666.1**

(22) Date of filing: **29.11.2016**

(51) Int Cl.:
*B32B 7/04* (2019.01)     *B32B 7/12* (2006.01)
*B32B 27/08* (2006.01)     *B32B 27/16* (2006.01)
*B32B 27/22* (2006.01)     *B32B 27/28* (2006.01)
*B32B 27/30* (2006.01)     *B32B 27/32* (2006.01)
*B32B 27/34* (2006.01)     *B32B 27/36* (2006.01)
*C08J 5/18* (2006.01)     *B32B 27/18* (2006.01)
*B32B 27/20* (2006.01)

(86) International application number:
**PCT/JP2016/085434**

(87) International publication number:
**WO 2017/094729 (08.06.2017 Gazette 2017/23)**

(54) **FOOD PACKAGING FILM, AND GIFT-BOXED SMALL ROLL OF FOOD PACKAGING FILM**

LEBENSMITTELVERPACKUNGSFOLIE UND KLEINE ROLLE IM GESCHENKKARTON MIT DER LEBENSMITTELVERPACKUNGSFOLIE

FILM D'EMBALLAGE ALIMENTAIRE, ET PETIT ROULEAU DE FILM D'EMBALLAGE ALIMENTAIRE EMPAQUETÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2015 PCT/JP2015/083644**

(43) Date of publication of application:
**10.10.2018 Bulletin 2018/41**

(73) Proprietor: **Showa Denko Materials Co., Ltd.**
**Tokyo 100-6606 (JP)**

(72) Inventor: **MIYATA Hiroyuki**
**Tokyo 100-6606 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 431 206     JP-A- 2002 020 636**
**JP-A- 2004 027 230     JP-U- 3 095 720**

• **DATABASE WPI Week 201507 2015 Thomson Scientific, London, GB; AN 2015-05761P XP002785593, & JP 2015 007198 A (MITSUBISHI PLASTICS IND LTD) 15 January 2015 (2015-01-15)**

Remarks:
The file contains technical information submitted after the application was filed and not included in this specification

## Description

### Technical Field

The present invention relates to an article that is a food wrapping rolled film with a box.

### Background Art

Conventionally, food wrapping films have been widely used for business use in hotels, restaurants and the like, or when storing foods at home, during cooking, and the like. Various improvements have been made for food wrapping films in order to improve convenience in use. For example, Patent Literature 1 discloses a food wrapping film in which embossing is applied to a predetermined portion of the film, for the purposes of preventing assimilation of a food material and container to be wrapped, with a film, and also easily distinguishing an end face of a film, and preventing excessive adhesion between films in the end face or a food material and container with a film, and the like.

### Citation List

### Patent Literature

Patent Literature 1: Japanese Unexamined Patent Publication No. 2003-63555

### Summary of Invention

### Technical Problem

It is an object of the present invention to provide an article that is a food wrapping rolled film with a box, the food wrapping film being distinguishable even when it is mixed in food and is excellent in film-forming properties and productivity.

### Solution to Problem

The present invention provides an article comprising a food wrapping film; a core material on which the food wrapping film is rolled; and a box in which the food wrapping film and the core material are stored, wherein the box is provided with a blade part for cutting the food wrapping film, wherein the food wrapping film comprises a thermoplastic resin, a blue colorant, and a white colorant, wherein the film has a total light transmittance of 70% or more, wherein the content of the blue colorant is 0.45 to 2.2% by mass based on the total amount of the film, and wherein the content of the white colorant is 0.15 to 0.55% by mass based on the total amount of the film.

The thermoplastic resin may be at least one selected from the group consisting of polyvinyl chloride resins, polyvinylidene chloride resins, polyolefin resins, polyester resins and polyamide resins.

The film may contain, as the thermoplastic resin, 70% by mass or more based on the total amount of the film of at least one resin selected from the group consisting of polyvinyl chloride resins, polyvinylidene chloride resins and polyolefin resins.

### Advantageous Effects of Invention

According to the present invention, it is possible to provide an article that is a food wrapping rolled film with a box, the food wrapping film being distinguishable even when it is mixed in food and is excellent in film-forming properties and productivity.

### Brief Description of Drawings

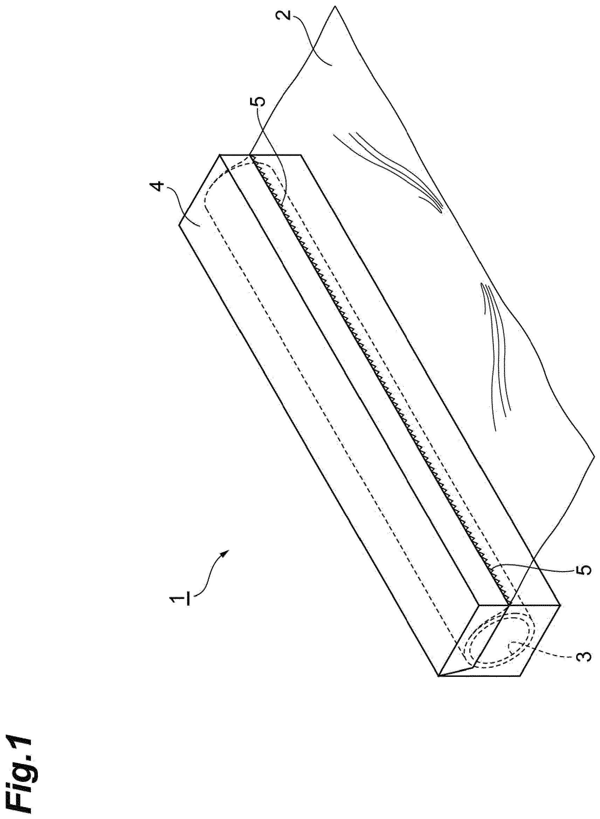

FIG. 1 is a schematic view showing a food wrapping rolled film with a box.

### Description of Embodiments

The film according to this embodiment contains a thermoplastic resin, a blue colorant and a white colorant, and is suitably used as a food wrapping film.

The thermoplastic resin may be a polyvinyl chloride resin such as polyvinyl chloride; a polyvinylidene chloride resin such as polyvinylidene chloride; a polyolefin resin such as polyethylene, polypropylene or saponified ethylene-vinyl acetate copolymer; a polystyrene resin such as butadiene-styrene copolymer, acrylonitrile-styrene copolymer, polystyrene, styrene-butadiene-styrene copolymer, styrene-isoprene-styrene copolymer or styrene-acrylic acid copolymer; a polyester resin such as polyethylene terephthalate, polyethylene naphthalate or polybutylene terephthalate; a polyamide resin such as 6-nylon, 6,6-nylon or 12-nylon; or the like. The thermoplastic resin is preferably a polyvinyl chloride resin, a polyvinylidene chloride resin or a polyolefin resin, and more preferably a polyvinyl chloride resin, a polyvinylidene chloride resin or a polyethylene resin, from the viewpoint of excellent handling property.

As the polyvinyl chloride resin, a polyvinyl chloride resin having an average degree of polymerization of 700 to 1300 is preferable from the viewpoint of excellent moldability, heat resistance and fluidity of the film. The average polymerization degree in the present specification means an average degree of polymerization measured according to JIS K6720-2.

The polyvinyl chloride resin may be a vinyl chloride homopolymer (polyvinyl chloride resin) from the viewpoint of excellent mechanical properties, or the polyvinyl chloride resin may be a copolymer of a vinyl chloride and other monomer copolymerizable therewith, for the purpose of imparting other properties. The copolymer may be a graft copolymer, a block copolymer or a random copolymer. Examples of the other monomer include olefins such as ethylene, propylene and polybutene; vinyl esters of saturated acids such as vinyl acetate and vinyl laurate; alkyl esters of unsaturated acids such as methyl acrylate and methyl methacrylate; alkyl vinyl ethers such as lauryl vinyl ether; maleic acid, acrylonitrile, styrene, methylstyrene, vinylidene fluoride; and the like. When the polyvinyl chloride resin is a copolymer, the content of the vinyl chloride unit in the copolymer may be 10% by mass or more based on the total amount of monomer units, and is preferably 30% by mass or more and more preferably 50% by mass or more, from the viewpoint of excellent mechanical properties. The upper limit of the content of the vinyl chloride unit in the copolymer is not particularly limited, and may be, for example, 99% by mass or less based on the total amount of monomer units.

The polyvinyl chloride resin may be, for example, a polymer blend with a three-dimensional polymer of acrylonitrile-butadiene-styrene or the like, a post-treatment product with an alcohol or the like, or a post-treatment product with a chlorine-containing compound. In these cases, the content of the vinyl chloride unit in the polyvinyl chloride resin may be 10% by mass or more based on the total amount of the resin.

The polyvinylidene chloride resin may be a vinylidene chloride homopolymer (polyvinylidene chloride resin), for example, may be a copolymer containing vinylidene chloride and other monomer copolymerizable with vinylidene chloride as monomer units. The other monomer may be vinyl chloride, an acrylate ester of acrylic acid and an alcohol having 1 to 8 carbon atoms, a methacrylic acid ester of methacrylic acid and an alcohol having 1 to 8 carbon atoms, a vinyl ester of an aliphatic carboxylic acid, an unsaturated aliphatic carboxylic acid, an olefin, a vinyl ether, or the like. The copolymer of vinylidene chloride and vinyl chloride shall belong to the polyvinylidene chloride resin.

The content of the vinylidene chloride unit in the polyvinylidene chloride resin may be, for example, 60% by mass or more, 70% by mass or more, or 80% by mass or more, based on the total amount of monomer units, from the viewpoint of moldability and heat resistance of the film. The upper limit of the content of the vinylidene chloride unit in the polyvinylidene chloride resin is not particularly limited, and may be, for example, 99% by mass or less based on the total amount of monomer units. The content of the vinylidene chloride unit can be measured by a nuclear magnetic resonance (NMR) apparatus.

The weight average molecular weight of the polyvinylidene chloride resin may be, for example, 40,000 to 180,000, 60,000 to 160,000, or 80,000 to 140,000. The weight average molecular weight of the polyvinylidene chloride resin can be measured by GPC method using polystyrene of known molecular weight as a standard substance.

The conditions of the GPC method used for measuring the weight average molecular weight of the polyvinylidene chloride resin are as follows. A gel chromatograph Alliance GPC 2000 model manufactured by Waters Corporation is used as a measuring device. A solution prepared by dissolving a polyvinylidene chloride resin in tetrahydrofuran so as to be 0.5% by weight is used as a sample.

Column: TSKgel GMHHR-H(S) HT 30 cm × 2, TSKgel GMH6-HTL 30 cm × 2 manufactured by Tosoh Corporation
Mobile phase: Tetrahydrofuran
Detector: Differential refractometer
Flow rate: 1.0 mL/min
Column temperature: 20°C
Injection amount: 500 μL

When the thermoplastic resin is a polyvinyl chloride resin or a polyvinylidene chloride resin, the film may further contain a plasticizer. Examples of the plasticizer include epoxidized oils such as epoxidized linseed oil, epoxidized soybean oil and epoxidized fatty acid alkyl ester, adipic acid esters having a linear or branched alkyl group having 6 to 10 carbon atoms, hydroxy polycarboxylic acid esters such as tributyl acetylcitrate and triethyl acetylate, fatty acid group dibasic acid esters such as di-normal butyl sebacate, glycol esters such as pentaerythritol ester and diethylene glycol benzoate, phosphate esters such as triphenyl phosphate and tricresyl phosphate, glycerin diacetomonolaurate, chlorinated paraffin, polyester plasticizers, and the like. These plasticizers are used singly or in combination of two or more. The content of the plasticizer is appropriately adjusted within the range of, for example, 20 to 50 parts by mass, based on 100 parts by mass of the polyvinyl chloride resin, depending on application such as the type of food to be wrapped, wrapping form, and wrapping method.

Examples of the polyolefin resin include polyethylene resins and the like, and the polyethylene resin may be a copolymer using low density polyethylene, linear low density polyethylene, linear ultra low density polyethylene, medium density polyethylene, high density polyethylene, ethylene or the like, as monomer units. Specifically, the polyethylene resin is a copolymer of ethylene and one or more selected from $\alpha$-olefins having 3 to 10 carbon atoms, such as propylene, 1-butene, 1-pentene, 1-hexene, 4-methyl-1-pentene, 1-heptene and 1-octene, vinyl esters such as vinyl acetate and vinyl propionate, unsaturated carboxylic acid esters such as methyl acrylate, ethyl acrylate, methyl methacrylate and ethyl methacrylate, unsaturated compounds such as conjugated diene and non-conjugated diene; and the like. The content of the ethylene unit in the polyethylene resin may be 50% by mass or more based on the total amount of monomer units.

The content of the thermoplastic resin may be 70% by mass or more or 75% by mass or more, and may be 85% by mass or less or 80% by mass or less, based on the total amount of the film, from the viewpoint of excellent productivity. The content of the polyvinyl chloride resin, the polyvinylidene chloride resin or the polyolefin resin is preferably within the above range, and the content of the polyvinyl chloride resin, the polyvinylidene chloride resin or the polyethylene resin is more preferably within the above range.

The blue colorant is, for example, a colorant having a maximum absorption wavelength in the visible light region (380 to 750 nm) of 600 to 750 nm. The absorbance at the maximum absorption wavelength in the visible light region of the blue colorant is preferably at least 2 times and more preferably at least 3 times the absorbance at 470 nm. Specifically, the blue colorant may be copper phthalocyanine (copper phthalocyanine blue), iron(III) hexacyanoferrate(II), cobalt·oxide-aluminum oxide mixture, indigo, ultramarine, or the like.

The content of the blue colorant is 0.45% by mass or more, preferably 0.6% by mass or more, further preferably 0.75% by mass or more, and particularly preferably 1.0% by mass or more, based on the total amount of the film, from the viewpoint of more excellent discrimination. The content of the blue colorant is 2.2% by mass or less, preferably 2.0% by mass or less, further preferably 1.9% by mass or less, and particularly preferably 1.8% by mass or less, based on the total amount of the film, from the viewpoint of more excellent film-forming properties and productivity. The content of the blue colorant is 0.45 to 2.2% by mass, preferably 0.45 to 2.0% by mass, 0.45 to 1.9% by mass, 0.45 to 1.8% by mass, 0.6 to 2.2% by mass, 0.6 to 2.0% by mass, 0.6 to 1.9% by mass, 0.6 to 1.8% by mass, 0.75 to 2.2% by mass, 0.75 to 2.0% by mass, 0.75 to 1.9% by mass, 0.75 to 1.8% by mass, 1.0 to 2.2% by mass, 1.0 to 2.0% by mass, 1.0 to 1.9% by mass, or 1.0 to 1.8% by mass, based on the total amount of the film, from the viewpoint of more excellent discrimination, film-forming properties and productivity. The content of the blue colorant is preferably higher than the content of the white colorant described later.

The white colorant is, for example, a colorant having an absorbance in the whole range of the visible light region (380 nm to 750 nm) of 0.3 or less (that scatters visible light). Specifically, the white colorant may be titanium oxide, titanium oxide-barium sulfate, titanium oxide-magnesium silicate, titanium oxide-calcium sulfate, or zinc oxide.

The content of the white colorant is 0.15% by mass or more, preferably 0.2% by mass or more, further preferably 0.25% by mass or more, and particularly preferably 0.3% by mass or more, based on the total amount of the film, from the viewpoint of more excellent discrimination. The content of the white colorant is 0.55% by mass or less, preferably 0.5% by mass or less, further preferably 0.45% by mass or less, and particularly preferably 0.4% by mass or less, based on the total amount of the film, from the viewpoint of more excellent film-forming properties and productivity. The content of the white colorant is 0.15 to 0.55% by mass, preferably 0.15 to 0.5% by mass, 0.15 to 0.45% by mass, 0.15 to 0.4% by mass, 0.2 to 0.55% by mass, 0.2 to 0.5% by mass, 0.2 to 0.45% by mass, 0.2 to 0.4% by mass, 0.25 to 0.55% by mass, 0.25 to 0.5% by mass, 0.25 to 0.45% by mass, 0.25 to 0.4% by mass, 0.3 to 0.55% by mass, 0.3 to 0.50% by mass, 0.3 to 0.45% by mass, or 0.3 to 0.4% by mass, based on the total amount of the film, from the viewpoint of more excellent discrimination, film-forming properties and productivity.

In addition to the thermoplastic resin, the blue colorant and the white colorant, the film may further contain other components. Examples of the other components include an anti-fogging agent, a heat stabilizer, a light stabilizer, a lubricant, a filler, a plate-out preventing agent, an antioxidant, a releasing agent, a viscosity reducing agent, a surfactant, a colorant other than the blue colorant and the white colorant, a fluorescent agent, a surface treatment agent, a crosslinking agent, a processing aid, a pressure sensitive adhesive, an antistatic agent, an ultraviolet absorber, an anti-blocking agent, and the like.

The film may consist of a single layer containing the thermoplastic resin, the blue colorant and the white colorant, or may consist of a plurality of layers. When the film consists of a plurality of layers, the film may include, for example, a first surface layer, an intermediate layer and a second surface layer in this order. In this case, for example, the intermediate layer may contain the blue colorant and the white colorant. The film may further include, for example, an adhesive layer containing an acid-modified polyolefin resin or the like in order to improve the adhesion between layers, and a heat resistant layer containing a polyamide resin may be further provided in order to improve the heat resistance of the film. When the thermoplastic resin is a polyvinyl chloride resin, the film preferably consists of a single layer containing the thermoplastic resin (polyvinyl chloride resin), the blue colorant and the white colorant.

The thickness of the film may be preferably 5 μm or more and more preferably 6 μm or more, from the viewpoint of efficiently shielding the food from the outside air, and may be preferably 25 μm or less and more preferably 12 μm or less, from the viewpoint of excellent handling property.

From the viewpoint of excellent visibility of the food, the total light transmittance of the film is 70% or more, and preferably 75% or more. The total light transmittance of the film is preferably 85% or less, more preferably 80% or less, and further preferably 79% or less, from the viewpoint of more excellent discrimination for food. The total light transmittance of the film is calculated according to the following formula based on the total transmitted light amount measured in accordance with JIS K7361-1.

$$\text{Total light transmittance (\%)} = (\text{Total transmitted light amount})/(\text{Incident light amount}) \times 100$$

The film is produced by mixing a composition containing a thermoplastic resin, a blue colorant and a white colorant with a mixer such as a V-type blender, a ribbon blender, a Henschel mixer or a super mixer, and further kneading the mixture with a mixing roll, a Banbury mixer or a kneading machine such as a kneader, as necessary, to obtain a composition, followed by extrusion molding, for example. Specifically, the composition is supplied to a hopper of an extruder, and a targeted film is obtained by an inflation method, a T-die method, or the like. Generally, the film is wound while the film is being produced, and the wound film is further rewound (rolled) for each desired length such as 20 m or 50 m, packed in a box (decorative box), thereby forming a product. That is, the film in this embodiment may be in the form of a food wrapping rolled film or in the form of a food wrapping rolled film with a box.

Specifically, as shown in FIG. 1, an article (a food wrapping rolled film) 1 with a box includes a food wrapping film 2, a core material 3 on which the food wrapping film 2 is rolled, and a box 4 in which the food wrapping film 2 and the core material 3 are stored, and the box 4 may be provided with a blade part 5 for cutting the food wrapping film 2. The material of the core material 3 and the box 4 is not particularly limited. From the viewpoint of easily recognizing the color of the film 2 from the outside, at least a part of the box 4 is preferably transparent, or has a hole in such a degree as not to impair the function as a box.

When the film is composed of a plurality of layers, the film can be obtained by putting the constituent raw materials of each layer into separate extruders, melt-extruding them, co-extruding each layer by inflation, T-die method or the like and laminating them. In this case, it is preferable to form the film by directly drawing the molten substance extruded from the T-die while rapidly cooling it with a casting roll or the like.

For the film obtained as above, depending on the purpose such as reduction in thermal shrinkage, natural shrinkage, etc. and suppression of occurrence of width contraction, longitudinal stretching between heating rolls, various heat setting, or heat treatment such as aging may be carried out. For the purpose of imparting and promoting anti-fogging property, antistatic property, tackiness, etc., surface treatment and surface processing such as treatment such as corona treatment and ripening, printing and coating and the like may be carried out.

The film described above is a film through which a wrapped food is visually recognizable from the outside. Further, the film is a film (stretch film) having stretchability (extendablility).

The film according to the present embodiment may be a sorting film for foods used for sorting foods. When using the film according to the present embodiment, two or more types of foods can be sorted into at least two groups according to the type of food. That is, for example, the first food can be wrapped in the film according to the present embodiment and sorted into the first group, while the second food can be wrapped in a film having a color different from that of the film according to the present embodiment or a colorless film and sorted into the second group.

Specifically, for example, when there is a first food containing a first allergic substance and a second food containing a second allergic substance, the first food is sorted into a first group that is a group of foods to be provided to a person having no allergic symptom with the first allergic substance, while the second food is sorted into a second group that is a group of foods to be provided to a person having no allergic symptom with the second allergic substance. In the above example, occurrence of an accident that the first or second allergic substance is provided to a person having an allergic symptom to the allergic substance can be suppressed.

Examples

Hereinafter, the present invention will be more specifically described based on examples, but the present invention is not limited to the examples.

<Examples 1 to 6 and Comparative Examples 1 to 4>

After charging the thermoplastic resin, blue colorant, white colorant and various additives shown in Tables 1 and 2 into a super mixer, the material temperature was raised from normal temperature to 130°C while stirring the mixture. After mixing, the mixture was taken out when cooled down to 70°C to prepare a resin composition. Each resin composition was extruded at a resin temperature of 200°C with a $\Phi$ 40 mm single screw extruder (L/D = 20) equipped with a T-die (width 350 mm, gap 0.4 mm) to prepare a film having a thickness of 8 $\mu$m. The numerical values in the tables are values in terms of solid content and represent % by mass.

<Examples 7 to 15 and Comparative Examples 5 to 6>

Resin compositions were prepared using the following thermoplastic resin, blue colorant, white colorant and various additives shown in Tables 3 and 4, and each resin composition was extruded with an inflation film forming apparatus to prepare a film with a thickness of 9 $\mu$m. The numerical values in the tables are values in terms of solid content and represent % by mass.

Thermoplastic resin a1: Polyvinyl chloride resin ("TH-1000" manufactured by TAIYO VINYL CORPORATION, average degree of polymerization: 1000)
Thermoplastic resin a2: Polyethylene resin ("Neozex 0234N" manufactured by Prime Polymer Co., Ltd.)
Vinylidene chloride resin a3: Copolymer of vinylidene chloride and vinyl chloride (vinylidene chloride/vinyl chloride (mass ratio) = 90/10), weight average molecular weight: 80,000
Blue colorant b1: Copper phthalocyanine (copper phthalocyanine blue, "NX-053 blue" manufactured by Dainichiseika Color & Chemicals Mfg. Co., Ltd.)
White colorant c1: Titanium oxide ("FTR-700" manufactured by SAKAI CHEMICAL INDUSTRY CO.,LTD.)
Additive d1: Dioctyl adipate ("SANSO CIZER DOA" manufactured by New Japan Chemical Co., Ltd.)
Additive d2: Epoxidized soybean oil ("Chemicizer SE-100" manufactured by Sanwa Synthetic Chemical Industry Co., Ltd.)
Additive d3: Glycerin fatty acid ester ("XO-100" manufactured by RIKEN VITAMIN CO., LTD.)
Additive d4: Ca/Zn Stabilizer ("SC-308E" manufactured by ADEKA Corporation)
Additive d5: Dibutyl sebacate ("DBS" manufactured by HOKOKU Co.,Ltd.)
Additive d6: Acetyl tributyl citrate ("ATBC" manufactured by ASAHI KASEI FINECHEM CO.,LTD.)

For each of the obtained films, measurement of total light transmittance and evaluation of discrimination for food were carried out as described below. The results are shown in Tables 1 to 4.

(Measurement of Total Light Transmittance)

The total transmitted light amount of the film was measured by a haze meter (model: NDH5000) manufactured by NIPPON DENSHOKU INDUSTRIES CO., LTD. in accordance with JIS K7361-1, and the total light transmittance of the film was calculated according to the following formula.

$$\text{Total light transmittance } (\%) = (\text{Total transmitted light amount})/(\text{Incident light amount}) \times 100$$

(Evaluation of Discrimination)

Fragments of 3 mm to 10 mm square were prepared from the obtained film, and when the films were mixed in food, whether the fragments of the film could be identified was visually observed. Evaluation criteria are as follows. When it is evaluated as A or B, it can be said that the film is excellent in discrimination.

A: It is extremely easy to discriminate the film for food.
B: It is easy to discriminate the film for food.
C: It is difficult to discriminate the film for food.

(Evaluation of Film-Forming Properties)

Each resin composition was extruded at a resin temperature of 200°C with a T-die extruder to mold a film, and the appearance of the obtained film was observed to evaluate film-forming properties. Evaluation criteria are as follows. When it is evaluated as A or B, it can be said that the film is excellent in film-forming properties.

A: A film having a substantially uniform thickness was obtained, and no scorch occurred by extrusion for 24 hours.
B: Slight unevenness in the film thickness was observed, and a scorch occurred by extrusion for 24 hours.
C: Unevenness in the film thickness was large, and a scorch occurred by extrusion for 8 hours.

(Evaluation of Productivity)

The number of occurrences of production trouble (perforation, film runout and slit defect) per 24 hours occurring when extruding each resin composition at a resin temperature of 200°C with a T-die extruder to mold a film was counted to evaluate productivity. Evaluation criteria are as follows. When it is evaluated as A or B, it can be said that the film is excellent in productivity.

A: The number of production trouble was 0 to 2
B: The number of production trouble was 3 to 4
C: The number of production trouble was 5 or more

[Table 1]

| | | Example 1 | Example 2 | Example 3 | Example 4 | Example 5 | Example 6 |
|---|---|---|---|---|---|---|---|
| Composition (% by mass) | a1 | 75.0 | 75.0 | 75.0 | 75.0 | - | - |
| | a2 | - | - | - | - | 95.5 | 97.3 |
| | b1 | 2.0 | 1.3 | 0.5 | 0.5 | 2.0 | 0.5 |
| | c1 | 0.5 | 0.3 | 0.2 | 0.5 | 0.5 | 0.2 |
| | d1 | 10.5 | 11.4 | 12.3 | 12.0 | - | - |
| | d2 | 9.0 | 9.0 | 9.0 | 9.0 | - | - |
| | d3 | 2.0 | 2.0 | 2.0 | 2.0 | 2.0 | 2.0 |
| | d4 | 1.0 | 1.0 | 1.0 | 1.0 | - | - |
| Total light transmittance (%) | | 76.0 | 79.0 | 82.0 | 80.0 | 76.0 | 83.0 |
| Discrimination | | A | A | B | B | A | B |
| Film-forming properties | | A | A | A | A | A | A |
| Productivity | | A | A | A | A | A | A |

[Table 2]

| | | Comparative Example 1 | Comparative Example 2 | Comparative Example 3 | Comparative Example 4 |
|---|---|---|---|---|---|
| Composition (% by mass) | a1 | 75.0 | 75.0 | - | - |
| | a2 | - | - | 97.5 | 96.0 |
| | b1 | - | 2.0 | - | 2.0 |
| | c1 | 0.5 | - | 0.5 | - |
| | d1 | 11.5 | 10 | - | - |
| | d2 | 10 | 10 | - | - |
| | d3 | 2.0 | 2.0 | 2.0 | 2.0 |
| | d4 | 1.0 | 1.0 | - | - |
| Total light transmittance (%) | | 80.0 | 78.0 | 81.0 | 78.0 |
| Discrimination | | C | A | C | A |
| Film-forming properties | | A | C | A | C |
| Productivity | | A | C | A | C |

[Table 3]

| | | Example 7 | Example 8 | Example 9 | Example 10 | Example 11 |
|---|---|---|---|---|---|---|
| Composition (% by mass) | a3 | 92.0 | 92.0 | 92.0 | 92.0 | 92.5 |
| | b1 | 2.0 | 1.6 | 1.2 | 1.0 | 0.5 |
| | c1 | 0.5 | 0.3 | 0.2 | 0.2 | 0.2 |
| | d2 | 1.4 | 1.7 | 1.9 | 2.0 | 2.0 |
| | d4 | 0.2 | 0.2 | 0.2 | 0.2 | 0.2 |
| | d5 | 3.5 | 3.7 | 3.9 | 4.0 | 4.0 |
| | d6 | 0.4 | 0.5 | 0.6 | 0.6 | 0.6 |
| Total light transmittance (%) | | 77.0 | 79.0 | 80.0 | 81.0 | 82.0 |
| Discrimination | | A | A | A | A | B |
| Film-forming properties | | A | A | A | A | A |
| Productivity | | A | A | A | A | A |

[Table 4]

| | | Example 12 | Example 13 | Example 14 | Example 15 | Comparative Example 5 | Comparative Example 6 |
|---|---|---|---|---|---|---|---|
| Composition (% by mass) | a3 | 92.0 | 92.6 | 92.0 | 92.0 | 92.7 | 93.7 |
| | b1 | 2.5 | 0.5 | 0.5 | 1.0 | - | 2.0 |
| | c1 | 0.5 | 0.1 | 0.7 | 0.1 | 0.5 | - |
| | d2 | 1.2 | 2.0 | 2.0 | 2.0 | 2.0 | 0.8 |
| | d4 | 0.2 | 0.2 | 0.2 | 0.2 | 0.2 | 0.2 |
| | d5 | 3.3 | 4.0 | 4.0 | 4.0 | 4.0 | 3.0 |
| | d6 | 0.3 | 0.6 | 0.6 | 0.7 | 0.6 | 0.3 |

(continued)

|  | Example 12 | Example 13 | Example 14 | Example 15 | Comparative Example 5 | Comparative Example 6 |
|---|---|---|---|---|---|---|
| Total light transmittance (%) | 75.0 | 84.0 | 78.0 | 82.5 | 79.0 | 78.0 |
| Discrimination | A | B | B | B | C | A |
| Film-forming properties | B | A | B | A | A | C |
| Productivity | B | A | B | A | A | C |

**Reference** Signs List

1... food wrapping rolled film with a box, 2... food wrapping film, 3... core material, 4... box, 5... blade part.

**Claims**

1. An article comprising:

    a food wrapping film;
    a core material on which the food wrapping film is rolled; and
    a box in which the food wrapping film and the core material are stored,
    wherein the box is provided with a blade part for cutting the food wrapping film,
    wherein the food wrapping film comprises:

        a thermoplastic resin;
        a blue colorant; and
        a white colorant,

    wherein the film has a total light transmittance of 70% or more,
    wherein a content of the blue colorant is 0.45 to 2.2% by mass based on a total amount of the film, and
    wherein a content of the white colorant is 0.15 to 0.55% by mass based on the total amount of the film.

2. The article according to claim 1, wherein the thermoplastic resin is at least one selected from the group consisting of polyvinyl chloride resins, polyvinylidene chloride resins, polyolefin resins, polyester resins and polyamide resins.

3. The article according to claim 1 or 2, comprising, as the thermoplastic resin, 70% by mass or more based on the total amount of the film of at least one resin selected from the group consisting of polyvinyl chloride resins, polyvinylidene chloride resins and polyolefin resins.

**Patentansprüche**

1. Gegenstand, umfassend:

    eine Lebensmitteleinwickelfolie,
    ein Kernmaterial, auf dem die Lebensmitteleinwickelfolie aufgerollt ist, und
    einen Behälter, in dem die Lebensmitteleinwickelfolie und das Kernmaterial gelagert sind,
    wobei der Behälter mit einem Klingenteil zum Schneiden der Lebensmitteleinwickelfolie ausgestattet ist,
    wobei die Lebensmitteleinwickelfolie umfasst:

        ein thermoplastisches Harz,
        ein blaues Färbemittel und
        ein weißes Färbemittel,

    wobei die Folie eine Gesamtlichtdurchlässigkeit von 70 % oder mehr aufweist,

wobei ein Gehalt des blauen Färbemittels 0,45 bis 2,2 Masse-%, bezogen auf die Gesamtmenge der Folie, beträgt und

wobei ein Gehalt des weißen Färbemittels 0,15 bis 0,55 Masse-%, bezogen auf die Gesamtmenge der Folie, beträgt.

2. Gegenstand gemäß Anspruch 1, wobei das thermoplastische Harz mindestens eines, ausgewählt aus der Gruppe, bestehend auf Polyvinylchloridharzen, Polyvinylidenchloridharzen, Polyolefinharzen, Polyesterharzen und Polyamidharzen, ist.

3. Gegenstand gemäß Anspruch 1 oder 2, umfassend als das thermoplastische Harz 70 Masse-% oder mehr, bezogen auf die Gesamtmenge der Folie, von mindestens einem Harz, ausgewählt aus der Gruppe, bestehend aus Polyvinylchloridharzen, Polyvinylidenchloridharzen und Polyolefinharzen.

**Revendications**

1. Article comprenant :

un film d'emballage alimentaire ;
un matériau de cœur sur lequel le film d'emballage alimentaire est enroulé ; et
une boîte dans laquelle le film d'emballage alimentaire et le matériau de cœur sont stockés,
dans lequel la boîte est pourvue d'une partie de lame pour couper le film d'emballage alimentaire,
dans lequel le film d'emballage alimentaire comprend :

une résine thermoplastique ;
un colorant bleu ; et
un colorant blanc,

dans lequel le film présente une transmittance totale de la lumière de 70 % ou plus,
dans lequel une teneur du colorant bleu est de 0,45 à 2,2 % en masse sur la base d'une quantité totale du film, et
dans lequel une teneur du colorant blanc est de 0,15 à 0,55 % en masse sur la base de la quantité totale du film.

2. Article selon la revendication 1, dans lequel la résine thermoplastique est au moins une sélectionnée dans le groupe consistant en des résines de polychlorure de vinyle, des résines de polychlorure de vinylidène, des résines de polyoléfine, des résines de polyester et des résines de polyamide.

3. Article selon la revendication 1 ou 2, comprenant, en tant que résine thermoplastique, 70% en masse ou plus sur la base de la quantité totale du film d'au moins une résine sélectionnée dans le groupe consistant en des résines de polychlorure de vinyle, des résines de polychlorure de vinylidène et des résines de polyoléfine.

*Fig.1*

EP 3 385 310 B1

**EP 3 385 310 B1**

## REFERENCES CITED IN THE DESCRIPTION

### Patent documents cited in the description

- JP 2003063555 A